# EUROPEAN PATENT SPECIFICATION

(11) **EP 1 693 923 B1**
(45) Date of publication and mention of the grant of the patent: **11.03.2009**
(21) Application number: 06100124.4
(22) Date of filing: 06.01.2006
(51) Int. Cl.: H01Q 3/26

(54) **Device for receiving digital signals with fading compensation**
Vorrichtung zum Empfangen digitaler Signale mit Fadingskompensation
Dispositif de réception de signaux numériques avec compensation de fading

(30) Priority: 18.02.2005 FR 0550459
(43) Date of publication of application: 23.08.2006
(73) Proprietor: Thomson Licensing, 92100 Boulogne-Billancourt (FR)
(72) Inventor: Robert, Jean-Luc, 35830 Betton (FR); Le Naour, Jean-Yves, 35740 Pace (FR); Louzir, Ali, 35000 Rennes (FR); Pintos, Jean-Francois, 35230 Bourgbarre (FR)
(74) Representative: Ruellan-Lemonnier, Brigitte

(56) References cited:
- US-A- 4 313 116
- US-A1- 2004 114 506
- US-B1- 6 188 357
- GIDONY D ET AL: "ADJACENT CHANNEL INTERFERENCE CANCELLATION FOR MSK-TYPE SIGNALS USING ANTENNA DIVERSITY IN RAYLEIGH FADING ENVIRONMENT" IEEE TRANSACTIONS ON COMMUNICATIONS, IEEE INC. NEW YORK, US, vol. 52, no. 2, February 2004 (2004-02), pages 317-325, XP001190065 ISSN: 0090-6778

## Description

The invention relates to a digital signal reception device, particularly DVB-T signals (Digital Video Broadcasting - Terrestrial) with fading compensation. It falls within the context of digital terrestrial television (DTT).

In a standard DVB-T signal reception system, OFDM (Orthogonal Frequency Division Multiplex) modulation is used. This is a particularly robust modulation and makes the isofrequency retransmission of a DVB -T channel possible in a domestic environment. The DVB -T signals can thus be captu red at a point in the environment where they are at a sufficient level, then amplified and retransmitted in the environment to be captured identically from this retransmitter by "portable" digital receivers such as digital television sets or analogue telev ision sets equipped with digital terrestrial decoders. This is the principle retained for Digital Terrestrial Television (DTT).

Nevertheless, in spite of the robustness of the OFDM modulation, in particular with respect to interference due to multipaths d uring transmission, notable reception problems occur for portable reception. In contrast with a received analogue signal, of which the deterioration is always gradual, in the case of DTT there is a sudden switch from very good quality to the total loss of the image.

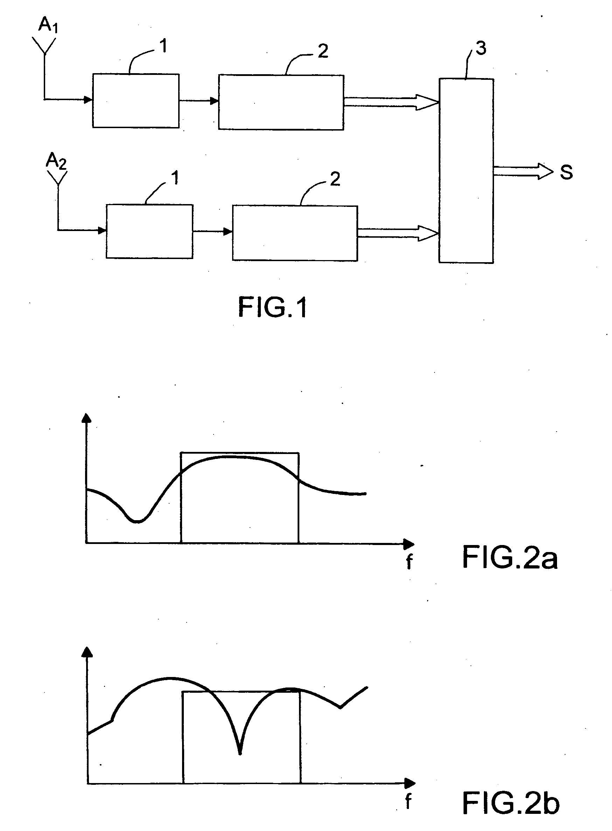

Currently, within the framework of the European DVB -T standard, the solution favoured for obtaining a more robust reception consists in the use of more than one antenna (typically 2). Such a device is shown in figure 1. This device thus comprises two complete reception systems and a combination circuit. The electromagnetic waves are received in parallel by two antennas A1, A2. For each channel, the tuner 1 determines the reception channel and selects the appropriate part of the signal received. This selected signal is then demodulated by the OFDM demodulator 2. The signals from the demodulators of each channel are recombined in the combination circuit 3. If the recombination is carried out appropriately, an optimal signal S of the MRC "Maximum Ratio Combining" type is obtained within the context of an indoor portable reception.

Nevertheless, the implementation of such a device requires two complete reception systems with demodulation. This solution remains relatively penalising at the level of the subscriber receiver complexity and is naturally reflected by the cost. Moreover, the digital correction processing implemented in these circuits occurs relatively far down in the demodulation system and requires a relatively long processing time. Such processing poses a problem in the case of rapidly changing fadings.

The invention therefore proposes a device comprising a single reception and demodulation system, acting in an adaptive manner greatly upstream in the processing of the received signal.

The invention relates to a device for receiving digital signals comprising a main antenna and P-1 secondary antennas to capture the electromagnetic signals at P points. It also comprises variable phase elements to phase shift the signals from the secondary antennas, a combination circuit of these P signals and a reception and demodulation system of a transmission channel n selected by a tuner. It also comprises a fading detection device at the level of the channels adjacent to the channel n selected, enabling the variable phase elements to be controlled to phase shift the signals from the other antennas.

The observation of the change in the power of the signal of the adjacent channels will therefore enable the change in the signal to be predicted for the channel selected. A device is therefore designed to provide a prediction of what will happen in the useful channel and thus permitting a rapid correction of fading.

Preferably, the fading detection device comprises means for measuring the true power simultaneously in each of the adjacent channels, and means responsible for analysing the relative change in the true power of the signal of the adjacent channels and for generating a control signal of the variable phase elements representative of the relative cha nge in power thus allowing the signals from the secondary antenna to be phase shifted.

Preferably, the means for measuring the simultaneous power according to the invention comprises selective filtering circuits, possibly of the surface wave type, responsible for intermediate frequency filtering on the channels adjacent to the received channel, power amplifiers and true power detection circuits.

According to one embodiment, the means for generating a representative command comprises a control unit managed by a microcontroller. Preferably, the variable phase elements (60, 61) for phase shifting the signals from the other antennas are monotone variation voltage -controlled phase shifters.

According to one embodiment, the number of adjacent channels is even and greater than or equal to 2.

According to another embodiment, the system according to the invention comprises a main antenna and a single secondary antenna.

The characteristics and advantages of the aforementioned invention will emerge more clearly upon reading the following description made with reference to the drawings attached in the appendix, wherein:
- Fig.1 already described, is a diagrammatic view of a system according to the prior art,
- Fig.2 shows diagrams of different types of fading that ca n occur during the reception of a signal,
- Fig.3 is a block diagram of an embodiment of a reception device according to the invention,
- Fig. 4 is a diagram of a particular embodiment of a reception device according to the invention,
- Fig. 5 is a diagram of another particular embodiment of a reception device according to the invention.

The circuit of the prior art has been described above and will not be described again. Moreover, the same reference is used for the circuit of the prior art and for the circuits according to the invention when this is the same element.

Figure 2 shows the frequency diagrams of different types of fading to which the signals are confronted.

In an indoor domestic environment, the environment is relatively stationary and stable and is characterized by a "flat fading" (see Fig. 2a) for a given position of the antenna.

However, if multipaths are created by movements in the room of one or more people, the fading can be a frequency selective fading (see Fig. 2b). Indeed, in this type of environment, the Doppler effect is very small and it means that the change in fading is correlated to the speed of movement of the moving element (e.g. a person) in the room, which remains relatively slow. Nevertheless, this movement will lead to a modification of the path taken by the wave reflecting on this moving element. This variation in the difference of the paths Δl related to the movement of the moving element can result, according to the geometric configuration and direction of movement of th e moving element, in an increase or decrease of the phase shift between the 2 access antennas.

Thus, let us assume that fading occurs in a scenario where this phase shift increases at the central frequency fₙ of the corresponding channel n. This fading will occur at the central frequency fₙ₊₁ of the channel n+1 for the value Δl' less than Δl. Hence, by an observation of the adjacent channels (to be specific, the channel n+1), it is possible to "see the fading arriv ing" and introduce by anticipation and gradually, as will be described below, th e phase shift that will compensate for the phase shift causing the fading.

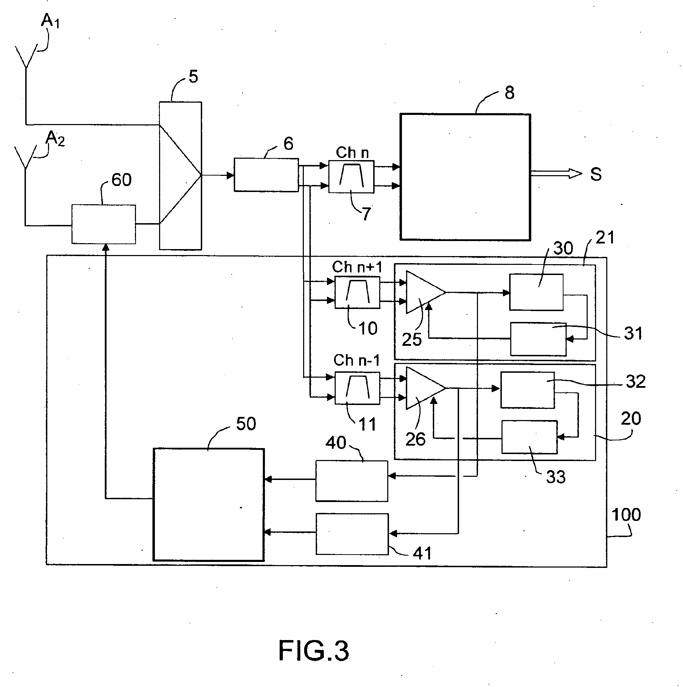

Figure 3 is a representation of an embodiment of a device according to the invention. This device comprises 2 reception antennas A1 and A2, the one A1 being called the main anten na and the other A2 is the secondary antenna. The fading will only be detected on the 2 adjacent channels n+1 and n -1 of the channel n selected.

The main antenna A1 is directly connected to a combination circuit 5 whereas the secondary channel A2 is connec ted by means of a phase shift circuit 60 to the combination circuit 5. This phase shift circuit is controlled by the fading detection device 100, which will be explained subsequently.

In the absence of fading, the two signals from antennas A1, A2 at the input of the combination circuit 5 are in phase and directly recombined by the combination circuit 5. A signal with optimal amplitude is therefore obtained at the output. In this case, the phase shift circuit is inactive and no phase shift is introduced into the signal from the secondary antenna;

The reception system, linked to the combination circuit 5 comprises a tuner 6 that can select the channel n selected, then an intermediate frequency filter 7 and a demodulator circuit 8 such that a demodulator OFDM .

When the channel n has been selected by the tuner 6, the part of the recombined signal corresponding to this selected channel n is then filtered by the intermediate frequency filter 7 and demodulated by the OFDM demodulator 8 so as to obtain an output sig nal S.

This signal S emitted at the output of the demodulator is in MPEG2 -TS format.

As explained above, the appearance of fading due to the change of the environment interferes with the reception of the signal in the useful channel n as well as the signa Is of the adjacent channels n+1 and n -1.

A fading compensation device 100 enable s the predictive analysis of fading in this channel n, by analysing the signals of these adjacent channels n+1 and n-1, then compensate for this fading by phase shifting the s ignal coming from the secondary antenna.

The tuner being set on the channel n, the intermediate frequency filters 10 and 11 can analyse the signals of these neighbouring channels n+1, n -1.

This fading compensation device comprises means for measuring the true power in each of the adjacent channels n+1 and n -1 and a means 50 responsible for analysing the relative change in the true power of each adjacent channel and thus generate a control signal of the variable phase elements 60 representing the relative ch ange of the power.

The means for measuring the true power is composed of filtering circuits 10, 11 connected to amplifiers 20 and 21 , then to true power detection circuits 40, 41. These filtering circuits are selective, of a surface wave type for example, to filter the adjacent channels at the intermediate frequency. The intermediate frequency amplifiers 20, 21 are elaborated by amplifiers 25, 26 associated with an automatic gain control circuit constituted by analogue to digital converters 30 and 32 and gain control blocks 31, 33. The true power detection circuits 40 and 41 are connected to the control block 50 responsible for analysing the relative changes in power. The control block 50 comprises at least one microprocessor and a memory so as to generate an item of control data at the variable phase element 60 depending on these measured power values.

The signals of the channels n-1 and n+1 are respectively filtered by the intermediate frequency filters 10, 11 before being amplified by amplification circu its 20, 21. The amplified signals control the inputs of the power detection circuits 40, 41 that supply the control block 50 with two precise information signals significant of the true power in the channels n+1 and n-1. This information is analysed continuously in relative value by the control block 50. It is stored in the memory of the control block. Any change of power in one of the two adjacent channels n-1 or n+1 greater than a predetermined threshold causes a control signal of a variable phase element 60 to be sent by the control block 50. This is a monotone variation signal, thus permitting a monotone phase shift of the signal coming from the secondary antenna by the variable phase element that can be for example a voltage-controlled phase shifter.

The modification of the phase of the signal of one of the reception channels is used to operate a gradual and anticipated modification of the signal from the secondary antenna to combine, thus allowing an optimum reception.

The result is a complete removal of the fading in the useful channel.

When the power variation information elaborated by the true power detector rises above the predefined threshold again, the control of the phase shifter remains at its last value, thus blocking the reception conditions u ntil the reappearance of a new fading in the adjacent channels. The predictive effect of the status of the adjacent channels n-1 and n+1 thus anticipates the arrival of a destructive fading in the useful channel.

The result is that the change in control of the phase shifter remains smooth and monotone.

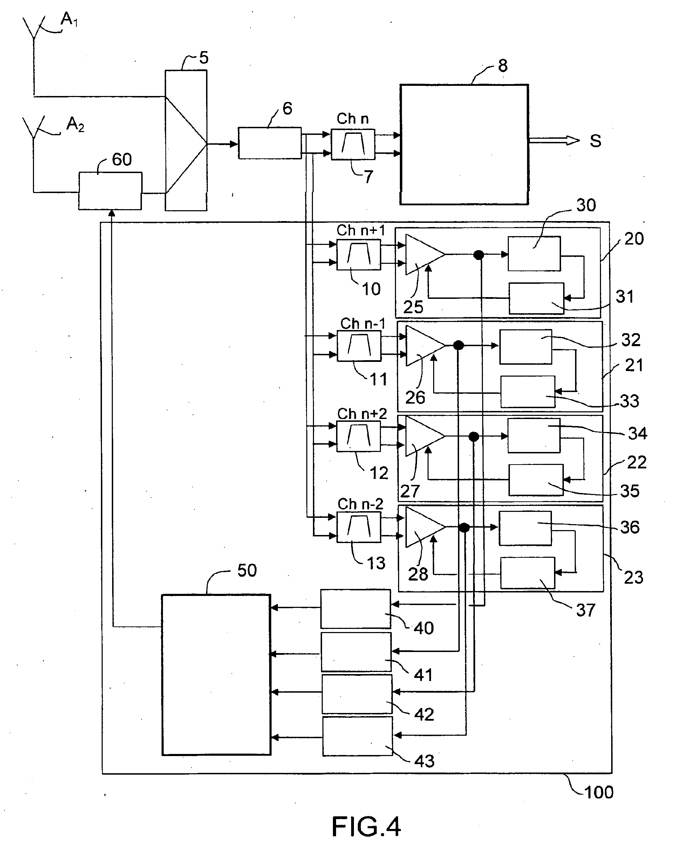

With reference to figure 4 a description will now be made of another embodiment in accordance with the invention. In this case, the fading detection device of the embodiment of the invention according to fi gure 4 will operate on the signals from four adjacent channels n+1, n -1, n+2, n-2 thus enabling additional prediction on channels n+2 and n -2 and thus an improved protection of the frequency selective fading.

The reception system, as for the device accordi ng to figure 3, comprises 2 antennas A1 and A2 linked to the combination circuit 5, of which one by means of a phase shifter 60, and a tuner 6 that selects the channel n chosen, then an intermediate frequency filter 7 and a demodulating circuit 8 to obtain a signal S in MPEG2-TS format, for a digital signal corresponding to the DVB -T standard.

The signals of the channels n+1, n-1, n+2, n-2 are analysed by the fading detection device 100. They are then filtered respectively by the intermediate frequency filters 10, 11, 12, 13 before being amplified by the amplification circuits 20, 21, 22, 23. The amplified signals control the inputs of the power detection circuits 40, 41, 42, 43 that supply the control block 50 with four precise information signals significant of the average power in the channels n -2, n-1, n+1, n+2. This information is analysed continuously in relative value by the control block 50. It is stored in the memory of the control block. Any change of power in one of the 4 adjacent channels n-2, n-1, n+1, n+2 greater than a predetermined threshold causes a control signal to be sent from a variable phase element 60. This is a monotone variation signal, thus permitting a monotone phase shift of the signal coming from the secondary antenna by the vari able phase element that can be a voltage-controlled phase shifter for example.

The signals of the 4 channels are therefore taken into account, enabling a finer analysis of the change in the power received on these 4 adjacent channels. The system thus acqu ires a greater prediction in the light of the analysis of the signals of channels n+2 and n -2 and therefore a greater efficiency.

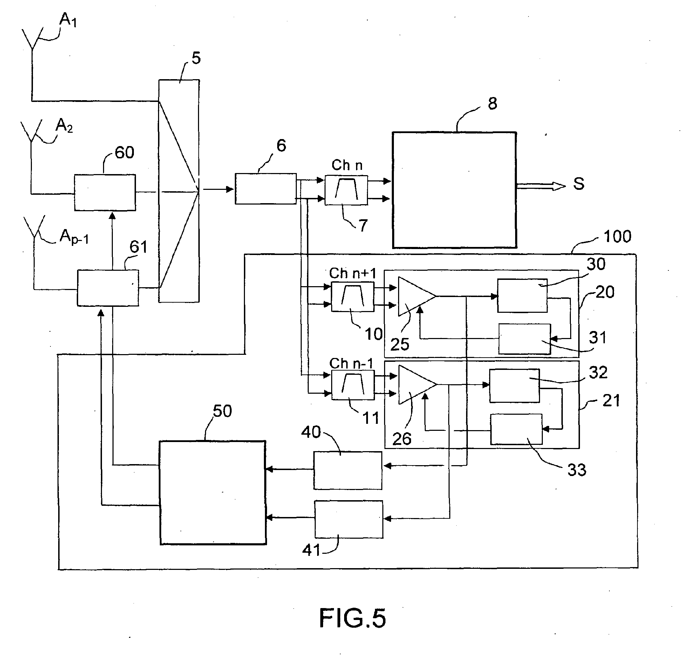

Figure 5 describes an embodiment in which the signals to combine come from p antennas, a main antenna A1 and p -1 secondary antennas A2, Ap. Each signal received by one of the p -1 secondary antennas will be phase shifted in an optimal manner by the phase shifters 60, 61 each controlled by a different signal from the fading detection device 100. These optimally phase shifted sign als will be recombined with the signal from the main antenna by the combination circuit 5. A channel n is selected by the tuner 6. The part of the recombined signal corresponding to this selected channel n is then filtered by the intermediate frequency filter 7 and demodulated by the OFDM demodulator 8 so as to obtain an output S in MPEG2-TS format.

As with the embodiment according to figure 3, the signals of channels n - 1 and n+1 are analysed by the fading detection device 100. They are then respectively filtered by the intermediate frequency filters 10, 11 before being amplified by amplification circuits 20, 21. The amplified signals control the inputs of the power detection circuits 40, 41 that supply the control block 50 with two precise information signa Is significant of the average power in the channels n+1 and n -1. This information is analysed continuously in relative value by the control block 50. It is stored in the memory of the control block. Any change of power in one of the 2 adjacent channels n-1 or n+1 greater than a predetermined threshold causes control signals to be sent from the variable phase elements 60, 61. These are monotone variation signals, thus permitting a monotone phase shift of the signals coming from the secondary antennas by the variable phase elements that can be for example voltage-controlled phase shifters.

## Claims

1. Digital signal reception device comprising a main antenna (A1) and P - 1 secondary antennas (A2, AP) to capture the electromagnetic signals at P points,
variable phase elements (60, 61) to phase shift the signals from the secondary antennas;
a combination circuit (5) of these P signals and a reception and demodulation system (7, 8) of a transmission channel n selected by a tuner (6);
**characterized in that**
it comprises a device (100) for detecting fending of the channels n+1, n-1 or n+1, n-1, n+2, n-2 adjacent to the channel selected, enabling the variable phase elements (60,61) to be controlled to phase shift the signals from the secondary antennas.

2. Device according to claim 1, **characterized in that** the fading detection device (100) comprises a means of measuring the true power simultaneously in each of the adjacent channels and
means (50) responsible for analysing the relative change in the true power of the signal of the adjacent channels and for generating a control signal of the variable phase elements (60) representative of the relative change in power.

3. Device according to claim 2, **characterized in that** the said means of measuring the simultaneous po wer comprise the selective filtering circuits (10, 11, 12, 13) responsible for intermediate frequency filtering on the channels adjacent to the received channel, n+1, n-1, n+2, n-2, power amplifiers (20, 21, 22, 23) and true power detection circuits (40, 41).

4. Device according to claim 3, **characterized in that** the said selective filtering circuits (10, 11, 12, 13) are of the surface wave type.

5. Device according to claim 2, **characterized in that** the means for generating the control of the variable pha se elements comprises a control block (50) managed by a microcontroller.

6. Device according to claim 2, **characterized in that** the variable phase elements (60, 61) for phase shifting the signals from other antennas are monotone variation voltage-controlled phase shifters.

7. Device according to claim 6, **characterized in that** the number of adjacent channels, n+1, n-1, n+2, n-2, is even and greater than or equal to 2.

8. Device according to claims 1 to 7, **characterized in that** the reception system comprises two antennas: a main antenna (A1) and a secondary antenna (A2).

## Patentansprüche

1. Digitalsignal-Empfangsvorrichtung, die umfasst: eine Hauptantenne (A1) und P-1 Sekundärantennen (A2, AP) zum Erfassen der elektromagnetischen Signale an P Punkten,
Elemente (60, 61) variabler Phase zur Phasenverschiebung der Signale von den Sekundärantennen;
eine Kombinationsschaltung (5) dieser P Signale und ein Empfangs- und Demodulationssystem (7, 8) eines durch einen Tuner (6) ausgewählten Übertragungskanals n;
**dadurch gekennzeichnet, dass**
Es eine Vorrichtung (100) zum Erfassen von Schwund der an den ausgewählten Kanal n angrenzenden Kanäle n+1, n-1 oder n+1, n-1, n+2, n-2 umfasst, die ermöglicht, dass die Elemente (60, 61) variabler Phase so gesteuert werden, dass die Signale von den Sekundärantennen phasenverschoben werden.

2. Vorrichtung nach Anspruch 1, **dadurch gekennzeichnet, dass** die Schwunderfassungsvorrichtung (100) umfasst: ein Mittel zum Messen der wahren Leistung gleichzeitig in jedem der angrenzenden Kanäle und
ein Mittel (50), das verantwortlich ist für das Analysieren der relativen Änderung der wahren Leistung des Signals der angrenzenden Kanäle und für das Erzeugen eines Steuersignals der Elemente (60) variabler Phase, die die relative Änderung der Leistung repräsentiert.

3. Vorrichtung nach Anspruch 2, **dadurch gekennzeichnet, dass** die Mittel zum Messen der gleichzeitigen Leistung die selektiven Filterschaltungen (10, 11, 12, 13), die für die Zwischenfrequenzfilterung an den an den Empfangskanal angrenzenden Kanälen n+1, n-1, n+2, n-2 verantwortlich sind, Leistungsverstärker (20, 21, 22, 23) und Schaltungen (40, 41) zum Erfassen der wahren Leistung umfassen.

4. Vorrichtung nach Anspruch 3, **dadurch gekennzeichnet, dass** die selektiven Filterschaltungen (10, 11, 12, 13) vom Oberflächenwellentyp sind.

5. Vorrichtung nach Anspruch 2, **dadurch gekennzeichnet, dass** das Mittel zum Erzeugen der Steuerung der Elemente variabler Phase einen Steuerblock (50) umfasst, der durch einen Mikrocontroller gemanagt wird.

6. Vorrichtung nach Anspruch 2, **dadurch gekennzeichnet, dass** die Elemente (60, 61) variabler Phase für die Phasenverschiebung der Signale von anderen Antennen spannungsgesteuerte Phasenschieber mit monotoner Änderung sind.

7. Vorrichtung nach Anspruch 6, **dadurch gekennzeichnet, dass** die Anzahl angrenzender Kanäle n+1, n-1, n+2, n-2 gerade und größer oder gleich 2 ist.

8. Vorrichtung nach Anspruch 1 bis 7, **dadurch gekennzeichnet, dass** das Empfangssystem zwei Antennen umfasst: eine Hauptantenne (A1) und eine Sekundärantenne(A2).

## Revendications

1. Dispositif de réception de signaux numériques comprenant une antenne principale (A₁) et P-1 antennes secondaires (A₂, A_{P}) pour capter les signaux électromagnétiques en P points,
des éléments à phase variable (60, 61) pour déphaser les signaux issus des antennes secondaires ;
un circuit de combinaison (5) de ces P signaux et une chaîne de réception et de démodulation (7, 8) d'un canal de transmission n sélectionné par un tuner (6) ;
**caractérisé en ce que**
il comporte un dispositif pour la détection de fading (100) des canaux adjacents n+1, n-1 ou n+1, n-1, n+2, n-2 au canal n sélectionné, permettant de commander les éléments à phase variable (60,61) pour déphaser les signaux issus des antennes secondaires.

2. Dispositif selon la revendication 1, **caractérisé en ce que** le dispositif de détection de fading (100) comporte des moyens de mesure de la puissance vraie simultanément dans chacun des canaux adjacents et
des moyens (50) chargés d'analyser l'évolution relative de la puissance vraie de chacun des canaux adjacents et de générer un signal de commande des éléments à phase variable (60) représentatif de l'évolution relative de la puissance.

3. Dispositif selon la revendication 2, **caractérisé en ce que** les dits moyens de mesure de la puissance simultanée comportent des circuits de filtrage sélectif (10, 11, 12 ,13) chargés de filtrer en fréquence intermédiaire les signaux des canaux adjacents au canal reçu n+1, n-1, n+2, n-2, des amplificateurs de puissance (20, 21, 22, 23) et des circuits de détection de puissance vraie (40, 41).

4. Dispositif selon la revendication 3, **caractérisé en ce que** les dits circuits de filtrage sélectif (10, 11,12 ,13) sont de type à onde de surface.

5. Dispositif selon la revendication 2, **caractérisé en ce que** les moyens pour générer une commande des éléments à phase variable comportent un bloc de contrôle (50) géré par un microcontrôleur.

6. Dispositif selon la revendication 5, **caractérisé en ce que** les éléments à phase variable (60,61) pour déphaser les signaux issus des autres antennes sont des déphaseurs commandés en tension à variation monotone.

7. Dispositif selon la revendication 6, **caractérisé en ce que** le nombre des canaux adjacents n+1, n-1, n+2, n-2 est pair et supérieur ou égal à 2.

8. Dispositif selon la revendication 1 à 7, **caractérisé en ce que** le système de réception comprend deux antennes : une antenne principale (A1) et une antenne secondaire (A2).
